(19) **Europäisches Patentamt / European Patent Office / Office européen des brevets**

(11) **EP 4 505 330 B1**

(12) **EUROPEAN PATENT SPECIFICATION**

(45) Date of publication and mention
of the grant of the patent:
**17.12.2025 Bulletin 2025/51**

(21) Application number: **23709427.1**

(22) Date of filing: **09.03.2023**

(51) International Patent Classification (IPC):
*G06F 21/32* (2013.01)    *G06F 21/34* (2013.01)
*G06F 21/56* (2013.01)    *G06K 19/073* (2006.01)
*G06Q 20/40* (2012.01)    *H04L 9/40* (2022.01)
*G06Q 20/34* (2012.01)

(52) Cooperative Patent Classification (CPC):
**G06F 21/32; G06F 21/34; G06F 21/567;
G06K 19/07354; G06Q 20/341; G06Q 20/40145;
G06Q 20/4016; G06Q 20/405; H04L 63/14**

(86) International application number:
**PCT/EP2023/055993**

(87) International publication number:
**WO 2023/194031 (12.10.2023 Gazette 2023/41)**

(54) **METHOD FOR EXECUTING AN AUTHENTICATION OF A USER FOR A TRANSACTION**

VERFAHREN ZUM DURCHFÜHREN EINER AUTHENTIFIZIERUNG EINES BENUTZERS FÜR EINE
TRANSAKTION

PROCÉDÉ D'EXÉCUTION D'UNE AUTHENTIFICATION D'UN UTILISATEUR POUR UNE
TRANSACTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.04.2022 EP 22305466**

(43) Date of publication of application:
**12.02.2025 Bulletin 2025/07**

(73) Proprietor: **THALES DIS FRANCE SAS
92190 Meudon (FR)**

(72) Inventors:
• **SALLES, Jean-Luc
  92190 MEUDON (FR)**
• **CAMMAS, Guillaume
  92190 MEUDON (FR)**

• **SOUCHON, Pierre
  92190 MEUDON (FR)**
• **BOULANGER, Nicolas
  92190 MEUDON (FR)**
• **LELOUP, Laurent
  92190 MEUDON (FR)**
• **PALADJIAN, Pierre
  92190 MEUDON (FR)**

(74) Representative: **Grevin, Emmanuel
Thales Dis France SAS
Intellectual Property Department
Avenue du Jujubier, Z.I. Athélia IV
13705 La Ciotat (FR)**

(56) References cited:
**JP-A- 2007 141 113     US-A1- 2008 056 544
US-A1- 2021 019 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**(Field of the invention)**

The present invention relates to methods for executing an authentication of a user for a transaction. It relates particularly to methods of authenticating a person aiming at performing a transaction involving a smart card that embeds a biometric sensor.

**(Background of the invention)**

Smart cards are portable small devices comprising a memory, a microprocessor and an operating system for computing treatments. They may comprise services like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smart card may also provide computation services based on cryptographic components. In general, smart cards have limited computing resources and limited memory resources and they are intended to connect a host machine that provides them with electric power either in contact mode or contactless mode.
A smart card may contain a biometric sensor like a fingerprint sensor that may contribute to the authentication of the user of the smartcard. Biometric smart cards generally embed a matching algorithm designed to compute a score of similarity between a biometric data captured by the biometric sensor and a reference pattern enrolled in a previous phase.
Biometric smart cards generally embed an anti-spoofing algorithm designed to detect fake biometric data presented to the biometric sensor. Such anti-spoofing algorithms compute a score that is compared to a predefined acceptance threshold. If the score meets or exceeds the acceptance threshold, then the biometric data captured by the sensor is considered as genuine (I.e. as belonging to a real individual). As known in biometric, during an anti-spoofing test, an anti-spoofing algorithm aims at checking that the biometric data captured by the sensor is not a data artificially generated which does not belong to a real person. On the other hand, during a matching test, a matching algorithm aims at checking that the biometric data captured by the sensor belongs to the real person whose biometric reference has been previously enrolled in the smart card.
Documents US2008/056544A1, US2021/019586A1, and JP2007141113A disclose smart cards with biometric authentication, including matching algorithms, historical authentication data, and in some cases multifactor verification using physical characteristics, but without implementing anti-spoofing scoring or adaptive security policies.

**(Summary of the Invention)**

It may happen that some fake fingers pass the anti-spoofing test. Inventors noticed that, from a statistical point of view, a large number of the fake fingers passing the anti-spoofing test have an anti-spoofing score slightly above the acceptance threshold, while genuine cardholders generally have a score well above the acceptance threshold.
There is need to enhance the treatment user authentication related to a transaction involving a biometric smart card.
The invention aims at solving the above mentioned technical problem.
An object of the present invention is a method for executing an authentication of a user for a transaction. A card associated to the user comprises a biometric sensor. The method comprising a step in which the card captures a biometric data from the user and checks said biometric data passes an anti-spoofing test. The method comprises a step in which the card retrieves, from a memory of the card, a security indicator updated during a previous transaction. The method comprises a step in which if the biometric data passed the anti-spoofing test, the card updates the security indicator by using a measured spoofing score computed during the anti-spoofing test, said measured spoofing score reflecting a degree of success in the anti-spoofing test. The method comprises a step in which the card generates a result by checking whether the security indicator complies with a pre-established safety rule. The method comprises a step in which the card selects a security policy depending on the result. The method comprises a step in which the card contributes to the authentication of the user according to the security policy or reject the authentication.
Advantageously, the security policy may require an offline authentication of the user, an online authentication of the user, a PIN code-based authentication of the user, a biometric-based authentication of the user or a two-factors authentication of the user.
Advantageously, the security indicator may be incremented by a difference between a maximum spoofing score and the measured spoofing score and said result may be generated by comparing the security indicator with a preset threshold.
Advantageously, the security indicator may be incremented if the measured spoofing score is in a predefined range of values and said result may be generated by comparing the security indicator with a predefined threshold.

Advantageously, the card may generate the result before updating the security indicator.

Advantageously, the card may reset the security indicator when the user has been successfully authenticated without using biometric data.

Another object of the present invention is a card associated to a user and comprising a biometric sensor and a memory. The card is designed to capture a biometric data from the user and to check said biometric data passes an anti-spoofing test. The card comprises at least a processing unit and program instructions which, when an authentication of the user is required for a transaction, cause said processing unit to:

- Retrieve, from said memory, a security indicator updated during a previous transaction,
- If said biometric data passed the anti-spoofing test, update the security indicator by using a measured spoofing score computed during the anti-spoofing test, said measured spoofing score reflecting a degree of success in the anti-spoofing test,
- Generate a result by checking whether the security indicator complies with a pre-established safety rule,
- Select a security policy depending on the result,
- Contribute to the authentication of the user according to the security policy or reject the authentication.

Advantageously, the security policy may require an offline authentication of the user, an online authentication of the user, a PIN code-based authentication of the user, a biometric-based authentication of the user or a two-factors authentication of the user.

Advantageously, the card may be configured to increment the security indicator incremented by a difference between a maximum spoofing score and the measured spoofing score and the card may be configured to generate said result by comparing the security indicator with a preset threshold.

Advantageously, the card may be configured to increment the security indicator if the measured spoofing score is in a predefined range of values and the card may be configured to generate said result by comparing the security indicator with a predefined threshold.

Advantageously, the card may be configured to generate the result before updating the security indicator.

Advantageously, the card may be configured to reset the security indicator when the user has been successfully authenticated without using biometric data.

Advantageously, the card may be a payment smart card.

**(Brief description of the drawings)**

Other characteristics and advantages of the present invention will emerge more clearly from a reading of the following description of a number of preferred embodiments of the invention with reference to the corresponding accompanying drawings in which:

- Fig. 1 shows an exemplary flow diagram for performing an authentication of a person for a transaction according to the invention; and
- Fig. 2 shows a diagram of a smart card according to an example of the invention.

**(Detailed description of the preferred embodiments)**

The invention may apply to any type of transaction involving a biometric appliance associated to a user. The biometric transaction appliance may be a smart card, a badge or an apparatus having a different form factor like a bracelet or a keychain. The transaction may be any type of transaction that requires the authentication of the user of the biometric appliance. For instance, the invention is well-suited for managing payment transactions or physical access control transactions.

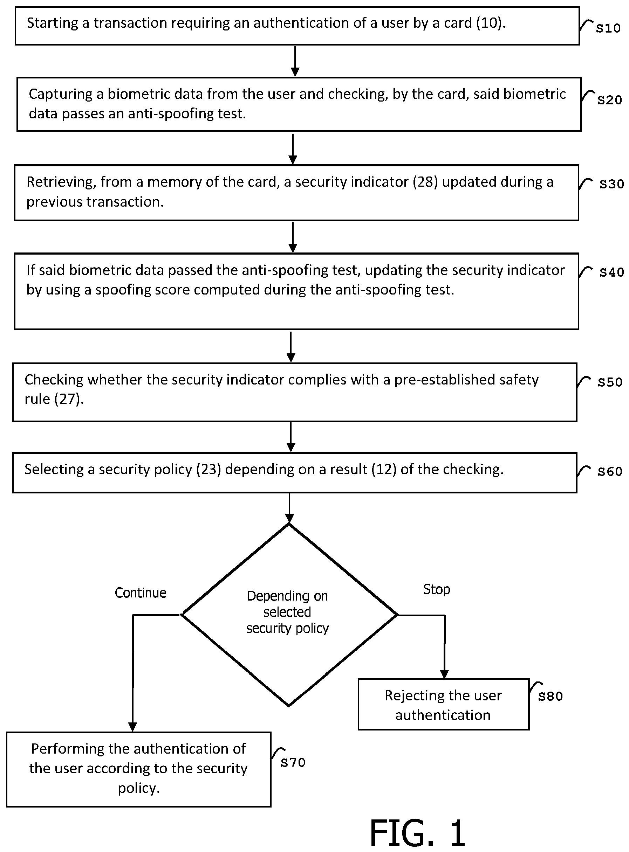

Figure 1 shows a first flow diagram for performing the authentication of a person for a transaction according to the invention.

The user requests execution of the transaction between the biometric appliance and another machine. In the example of Figure 1, the biometric appliance is a smart card executing a process which allows the smart card to deny or accept execution of the transaction depending on the authentication of the cardholder.

In this example, the smart card is a bank smart card allocated to a bank customer. The bank smart card embeds a biometric sensor able to capture fingerprint data.

The user (e.g. bank customer) is supposed to request a transaction between the smart card and another physical device. For instance, the transaction may be a payment to be carried out between the smart card and a distant server through a terminal located at a point of sales.

At first step S10, a transaction starts. This transaction requires the authentication of the user by the card.

At step S20, the smart card captures a biometric data from the user and checks the captured biometric data passes an anti-spoofing test. In particular, the card generates a spoofing score that is computed during the anti-spoofing test. The spoofing score (also named measured spoofing score) reflects a degree of success in the anti-spoofing test. Preferably, the captured biometric data is a fingerprint.

Then at step S30, the card retrieves from its memory, a security indicator that has been updated during a previous transaction.

If the captured biometric data passed the anti-spoofing test, the card updates the security indicator by using the generated spoofing score at step S40. The card may also be adapted to update the security indicator even if the captured biometric data did not pass the anti-spoofing test.

In some embodiments, the card may be adapted to update the security indicator by using the generated spoofing score only if the captured biometric data passed the anti-spoofing test.

At step S50, the card checks whether the security indicator complies with a pre-established safety rule.

At step S60, the card selects a security policy 23 depending on the result 12 of the checking of the security indicator.

Depending on the selected policy 23, the card may reject the authentication of the user at step S80 or contribute to the authentication of the user according to the selected security policy at step S70.

In some embodiments, the selected security policy 23 may require an offline authentication of the user and the card may authenticate the user based on the matching algorithm at step S70. Thus, the user may be successfully authenticated only if the captured biometric data passes the matching test into the card.

In some embodiments, the selected security policy 23 may require an online authentication of the user and the card may authenticate the user based on the matching algorithm at step S70. Thus, the user may be successfully authenticated only if a remote server provides its agreement during the transaction in addition to the fact that the captured biometric data passes the matching test into the card.

In some embodiments, the selected security policy 23 may require a PIN code-based authentication of the user and the card may authenticate the user based on a PIN code typed by the user on a hardware device (like a Point-Of-Sale terminal) coupled to the card at step S70. Thus, the user may be successfully authenticated only if the PIN code provided by the user is successfully checked by the card.

In some embodiments, the card may be configured to update the security indicator by incrementing the security indicator by a difference between a maximum spoofing score 35 and the measured spoofing score. The maximum spoofing score 35 is the maximum value the spoofing score can have. In those embodiments, the pre-established safety rule may be the fact that the card is configured to generate the result 12 by comparing the security indicator with a preset threshold 26 (also called GsoFi Limit). In such a case, the security indicator is an index reflecting the growing suspicion of fake biometric data. Depending on the generated result 12, a security policy is selected and applied to the pending transaction. For instance, the selected security policy may require an online customer authorization so that a card declared as stolen could be blocked.

The following formulas may be used to update the security indicator:

Delta = maximum spoofing score - measured spoofing score, and New value of security indicator = Previous value of security indicator + Delta.

Assuming that a spoofing score may vary from zero (minimum) to 100 (maximum), and the measured spoofing score is equal to 65, then Delta = 100 - 65 = 35 and the security indicator will be incremented by 35.

The value of the security indicator may gradually increase over the transactions. When the value of the security indicator reaches or exceeds the preset threshold 26, the card may be configured to select and apply an appropriate security action, like denying the transaction, requiring an out-of-band user authentication or requiring a user authentication relying on a non-biometric measurement.

The value of the preset threshold 26 may be set to 20, 60 or 110 for instance.

In some embodiments, the card may be configured to reset the security indicator when the measured spoofing score is above a predefined limit (for instance above 95 percent or 98 percent).

In some embodiments, the card may be configured to update the security indicator only if the measured spoofing score is in a predefined range of values.

In those embodiments, the pre-established safety rule may be the fact that the card is configured to generate the result 12 by comparing the security indicator with a preset threshold 24 (also called CsoFi Limit). In such a case, the security indicator is an index reflecting the consecutive suspicion of fake biometric data. Depending on the generated result 12, a security policy is applied to the pending transaction. For instance, the selected security policy may require an online customer authorization so that a card declared as stolen could be blocked.

The following formulas may be used to update the security indicator:

New value of security indicator = Previous value of security indicator + fixed value.

The fixed value may be set to 1 (one) while the security indicator may be initialized to 0 (zero) at an initial stage. Thus, the security indicator may reflect the number of time the measured spoofing score is just above an acceptable limit.

Assuming that a spoofing score may vary from zero (minimum) to 100 (maximum), the acceptable threshold ThrN may be set to 80 and the High quality threshold ThrH may be set to 90. A captured biometric data whose measured spoofing score is below the acceptable threshold ThrN is considered as fake and a captured biometric data whose measured spoofing score reaches or exceeds the acceptable threshold ThrN is considered as genuine.

Assuming that the measured spoofing score is equal to 85, then the security indicator will be incremented by the fixed value (by 1 for instance).

The value of the security indicator may gradually increase over the transactions. When the value of the security indicator reaches or exceeds the preset threshold 24, the card may be configured to apply an appropriate security action, like denying the transaction, requiring an out-of-band user authentication or requiring a user authentication relying on a non-biometric measurement.

The value of the preset threshold 24 may be set to 3, 5 or 9 for instance.

The card may be configured to reset the security indicator when the measured spoofing score reaches or exceeds the acceptable threshold ThrN.

In some embodiments, the card may be configured to generate the result 12 before updating the security indicator. Consequently, the updated value of the security indicator will be used for next transaction while the current transaction takes into account the value of the security indicator as modified during a previous transaction.

In some embodiments, the card may be configured to reset the security indicator when the user has been successfully authenticated without using a biometric data captured by the sensor. Typically, the value of security indicator may be set to 0 (zero) as soon as the user is successfully authenticated by their PIN code or an out of band mechanism.

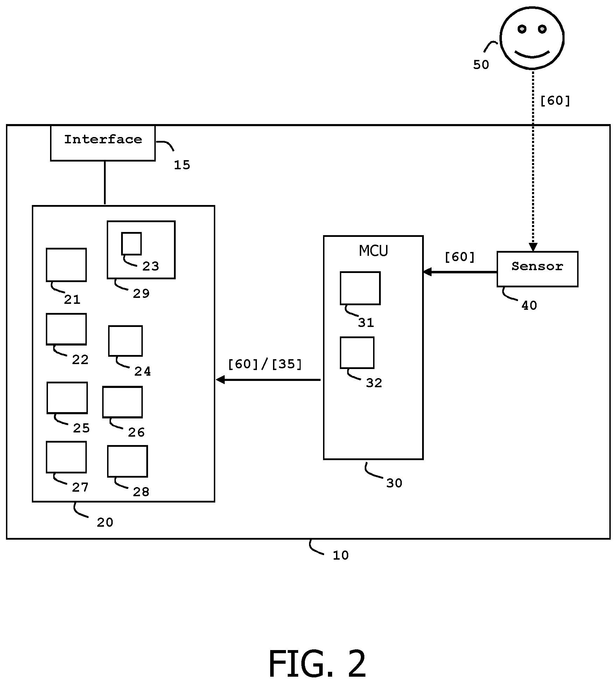

Figure 2 shows a diagram of a smart card according to an example of the invention

In this example, the smart card 10 is a payment smart card.

The smart card 10 comprises a secure chip 20 (also called secure element), a biometric sensor 40 and a sensor controller 30 (also named processor unit). The sensor controller may be a microcontroller unit (MCU). The biometric sensor may be a conventional biometric sensor like a fingerprint sensor.

The smart card 10 comprises a hardware communication interface 15 able to exchange data with an external device through a contact or contactless communication protocol.

The sensor controller 30 is coupled to the biometric sensor 40 and configured to retrieve biometric data 60 (also named raw biometric data) captured by the sensor 40.

In the example of Figure 2, the sensor controller 30 comprises a biometric algorithm 31 (anti-spoofing algorithm) aiming at detecting spoofing attacks on the sensor 40. The biometric algorithm 31 is configured to compute a spoofing score 35 (or measured spoofing score) that reflects a degree of success in an anti-spoofing test. The sensor controller 30 may comprise an analyzer engine 32 adapted to extract remarkable items from the biometric data collected by the sensor 40.

The sensor controller 30 is configured to exchange data with the secure element 20.

The sensor controller 30 may comprise a hardware processor and a non-volatile memory (not shown). In one embodiment, the non-volatile memory stores software instructions that are executed by the processor to perform the functions of the sensor controller. In some embodiments, the functions of the sensor controller 30 described above may be implemented as pure hardware solution or a combination of hardware and firmware.

In the example of Figure 2, the secure element 20 is based on a conventional smart card chip with additional features. The secure element 20 is able to perform a transaction with an external machine. For instance, the transaction may be a payment transaction.

The secure element 20 comprises a security indicator 28 that can be initialized during a personalization phase of the card.

The secure element 20 comprises a security engine 22 designed to retrieve the security indicator 28 from the memory of the secure element.

The security engine 22 is adapted to get the measured spoofing score 35 computed by the biometric algorithm 31 of the sensor controller during the anti-spoofing test.

The security engine 22 may be adapted to update the security indicator by using the retrieved measured spoofing score if the captured biometric data passed the anti-spoofing test. In some embodiments, the security engine 22 may be adapted to update the security indicator by using the retrieved measured spoofing score only if the captured biometric data passed the anti-spoofing test.

The security engine 22 comprises pre-established safety rule 27 and a set 29 of security policy.

The security engine is adapted to generate a result 12 by checking whether the security indicator 28 complies with the pre-established safety rule 27 and to select a security policy 23 (belonging to the set 29) depending on the computed result 12.

The security engine 22 is adapted to apply the selected security policy 23 to the pending transaction by rejecting the user authentication or contributing to the authentication of the user.

The selected security policy 23 may require an offline authentication of the user, an online authentication of the user, a PIN code-based authentication of the user, a biometric-based authentication of the user or a two-factor authentication of the user for instance.

In some embodiments, the security engine 22 may be configured to update the value of the security indicator by incrementing the security indicator by a difference between a maximum spoofing score 35 and the measured spoofing score 35 measured from biometric data 60 captured by the sensor 40. The maximum spoofing score 35 is the maximum value a spoofing score can have. In those embodiments, the pre-established safety rule 27 may be the fact that the card is configured to generate the result 12 by comparing the security indicator with a preset threshold 26 (also named GsoFi Limit). Thus, the security indicator may be an index reflecting the growing suspicion of fake biometric data. The security engine 22 may be configured to apply to the pending transaction a security policy that depends on the generated result 12. For instance, the selected security policy may require an online cardholder authentication so that a card declared as stolen could be blocked.

Based on formulas described above for GsoFi Limit, assuming that a spoofing score may vary from zero (minimum) to 100 (maximum), and the measured spoofing score is equal to 85, the security engine 22 may compute a Delta = 100 - 85 = 15 and increment the security indicator value by 15.

Then the security engine 22 may compare the value of the security indicator with the preset threshold 26 (I.e. GsoFi Limit) and if the value of the security indicator reaches or exceeds the preset threshold 26, the security engine 22 may be configured to select and apply an appropriate security action, like denying the transaction, requiring an out-of-band user authentication, requiring a two-factor authentication or requiring a user authentication relying on a non-biometric measurement.

In some embodiments, the security engine 22 may be configured to update the security indicator only if the measured spoofing score 35 is in a predefined range of values. In those embodiments, the pre-established safety rule 27 may be the fact that the card is configured to generate the result 12 by comparing the security indicator with a preset threshold 24 (also named CsoFi Limit). In such a case, the security indicator may be an index reflecting the consecutive suspicion of fake biometric data. The security engine 22 may be configured to select and apply to the pending transaction a security policy that depends on the generated result 12. For instance, the selected security policy may require an online customer authorization so that a card declared as stolen could be blocked.

The security engine 22 may be configured to use the following formula: New value of security indicator = Previous value of security indicator + specific value.

The specific value may be a fixed value set to 1 or 2 for example, while the security indicator may have been initialized to 0 (zero) at an initial stage. Thus, the security indicator may reflect the number of time the measured spoofing score is just above an acceptable limit (and below a Very good limit).

Assuming that a spoofing score may vary from zero (minimum) to 100 (maximum), the acceptable threshold ThrN may be set to 78 and the High quality threshold ThrH may be set to 88. A captured biometric data whose measured spoofing score is below the acceptable threshold ThrN is considered as fake and a captured biometric data whose measured spoofing score reaches or exceeds the acceptable threshold ThrN is considered as genuine.

If the measured spoofing score 35 is equal to 85, then the security engine 22 may be configured to increment the security indicator by the specific value because the measured spoofing score is in the range [78 - 88].

Then the security engine 22 may compare the value of the security indicator with the preset threshold 24 (I.e. CsoFi Limit) and if the value of the security indicator reaches or exceeds the preset threshold 24, the security engine 22 may be configured to select and apply an appropriate security action, like denying the transaction, requiring an out-of-band user authentication, requiring a two-factor authentication or requiring a user authentication relying on a non-biometric measurement.

Although described in an incremental manner, the security indicator may be initialized with a big value and decremented by the security engine 22. In such a case, the security engine 22 can be configured to select and apply a relevant security action as soon as the security indicator is below the preset threshold (24 or 26).

The secure element 20 is designed to comprise a reference data 25 (also named biometric pattern) uniquely associated with the genuine user 50. The secure element 20 comprises a biometric algorithm 21 (match algorithm) aiming at comparing the reference data 25 with remarkable items extracted from the biometric data 60 collected by the sensor 40.

The secure element 20 comprises a hardware processor and a non-volatile memory (not shown). In one embodiment, the non-volatile memory stores program instructions that can be executed by the processor to perform the functions of the secure element and the security engine. In one embodiment, the functions of the secure element 20 / security engine 22 described above may be implemented as pure hardware solution or a combination of firmware and hardware.

In some embodiments, the secure element 20 may comply with Specifications from EMV® Contactless Specifications for Payment Systems Version 2.6 or Version 3.0.

In some embodiments, the secure element 20 may comply with Visa® Integrated Circuit Card Specification (VIS) Version 1.6 or Version 2.2.

In some embodiments, the secure element 20 may comply with M/Chip Advance Card Application Specification Version 1.2.2 or Version 1.2.3.

Although the sensor controller 30 and the secure element 20 have been described has separated components in the above-presented examples, they also may be merged in a single hardware component, like a secure microcontroller. For instance, the secure element 20 may acts as the sensor controller 30.

In some embodiments, the card may be configured to use different modes of security score treatment (e.g. different threshold values) assigned to as many different types of transactions. For instance, a first security indicator may be allocated to payment transactions while a second security indicator allocated to cash withdrawal transactions.

Thanks to some embodiments of the invention, the card may drive its own risk management policy by taking into account the quality of the computed anti-spoofing score even if the captured biometric data passes the anti-spoofing test.

Thanks to some embodiments of the invention, it is possible to automatically and smoothly adapt the behavior of card during a transaction in which the card is supposed to authenticate the cardholder.

The invention is not limited to the described embodiments or examples. In particular, the described examples and embodiments may be combined.

The invention is not limited to smart cards and applies to any biometric transaction appliance allocated to a user.

The biometric transaction appliance may embeds several biometric sensors which are used in combination.

The transaction may be a payment transaction, a request for banking authorization or a re-credit for example.

Although examples of the invention has been provided in the banking domain, the invention also applies to other domains like identity (passport/driving license) or mass transit. For example, the transaction may be an access request to a physical building, room or area.

Although examples of the invention has been provided for a fingerprint sensor, it may apply to devices embedding any biometric sensor targeting various types of data: iris, voice, face, blood or palm print for instance.

It is to be noted that the invention applies to any biometric smart cards or similar appliances able to run a transaction with an external machine in contact or contactless mode.

## Claims

1. A method for executing an authentication of a user (50) for a transaction, a card (10) associated to said user comprising a biometric sensor (40), the method comprising a step in which the card captures (S20) a biometric data from the user and checks said biometric data passes an anti-spoofing test, said anti-spoofing test being different from a matching test,

   **characterized in that** the method comprises the steps in which the card:

   - Retrieves (S30), from a memory of the card, a security indicator (28) updated during a previous transaction using a previous spoofing score computed during said previous transaction,
   - If said biometric data passed the anti-spoofing test, updates (S40) the security indicator by using a measured spoofing score computed during the anti-spoofing test, said measured spoofing score reflecting a degree of success in the anti-spoofing test,
   - Generates a result (12) by checking (S50) whether the security indicator complies with a pre-established safety rule (27),
   - Selects (S60) a security policy (23) depending on the result, and
   - Contributes (S70) to the authentication of the user according to the security policy or reject (S80) the authentication.

2. The method according to claim 1, wherein the security policy requires an offline authentication of the user, an online authentication of the user, a PIN code-based authentication of the user, a biometric-based authentication of the user or a two-factors authentication of the user.

3. The method according to claim 1, wherein the security indicator is incremented by a difference between a maximum spoofing score (35) and the measured spoofing score and wherein said result is generated by comparing the security indicator with a preset threshold (26).

4. The method according to claim 1, wherein the security indicator is incremented if the measured spoofing score is in a predefined range of values and wherein said result is generated by comparing the security indicator with a predefined threshold (24).

5. The method according to claim 1, wherein the card generates the result before updating the security indicator.

6. The method according to claim 1, wherein the card resets the security indicator when the user has been successfully authenticated without using biometric data.

7. A card (10) associated to a user (50) and comprising a biometric sensor (40) and a memory, the card being able to capture a biometric data from the user and to check said biometric data passes an anti-spoofing test, said anti-spoofing test being different from a matching test,
   **characterized in that** the card comprises at least a processing unit and program instructions which, when an authentication of the user is required for a transaction, cause said processing unit to:

   - Retrieve, from said memory, a security indicator (28) updated during a previous transaction using a previous spoofing score computed during said previous transaction,
   - If said biometric data passed the anti-spoofing test, update the security indicator by using a measured spoofing score computed during the anti-spoofing test, said measured spoofing score reflecting a degree of success in the anti-spoofing test,
   - Generate a result (12) by checking whether the security indicator complies with a pre-established safety rule (27),
   - Select a security policy (23) depending on the result,
   - Contribute to the authentication of the user according to the security policy or reject the authentication.

8. The card according to claim 7, wherein the security policy requires an offline authentication of the user, an online authentication of the user, a PIN code-based authentication of the user, a biometric-based authentication of the user or a two-factors authentication of the user.

9. The card according to claim 7, wherein the card is configured to increment the security indicator incremented by a difference between a maximum spoofing score (35) and the measured spoofing score and wherein the card is configured to generate said result by comparing the security indicator with a preset threshold (26).

10. The card according to claim 7, wherein the card is configured to increment the security indicator if the measured spoofing score is in a predefined range of values and wherein the card is configured to generate said result by comparing the security indicator with a predefined threshold (24).

11. The card according to claim 7, wherein the card is configured to generate the result before updating the security indicator.

12. The card according to claim 7, wherein the card is configured to reset the security indicator when the user has been successfully authenticated without using biometric data.

13. The card according to claim 7, wherein the card is a payment smart card.

**Patentansprüche**

1. Verfahren zum Ausführen einer Authentifizierung eines Benutzers (50) für eine Transaktion, eine dem Benutzer zugeordnete Karte (10) umfassend einen biometrischen Sensor (40), das Verfahren umfassend einen Schritt, in dem die Karte biometrische Daten von dem Benutzer erfasst (S20) und prüft, ob die biometrischen Daten einen Anti-Spoofing-Test bestehen, wobei sich der Anti-Spoofing-Test von einem Matching-Test unterscheidet,
   **dadurch gekennzeichnet, dass** das Verfahren die Schritte umfasst, in denen die Karte:

   - aus einem Speicher der Karte einen Sicherheitsindikator (28) abruft (S30), der während einer vorherigen Transaktion unter Verwendung eines vorherigen Spoofing-Scores aktualisiert wurde, der während der vorherigen Transaktion berechnet wurde,
- falls die biometrischen Daten den Anti-Spoofing-Test bestanden haben, den Sicherheitsindikator aktualisiert (S40), durch Verwenden eines gemessenen Spoofing-Scores, der während des Anti-Spoofing-Tests berechnet wurde, wobei der gemessene Spoofing-Score einen Grad des Erfolgs in dem Anti-Spoofing-Test widerspiegelt,
- ein Ergebnis (12) erzeugt, durch ein Prüfen (S50), ob der Sicherheitsindikator einer vorab festgelegten Sicherheitsregel (27) entspricht,
- abhängig von dem Ergebnis eine Sicherheitsrichtlinie (23) auswählt (S60) und
- zu der Authentifizierung des Benutzers gemäß der Sicherheitsrichtlinie beiträgt (S70) oder die Authentifizierung ablehnt (S80).

2. Verfahren nach Anspruch 1, wobei die Sicherheitsrichtlinie eine Offline-Authentifizierung des Benutzers, eine Online-Authentifizierung des Benutzers, eine PIN-Code-basierte Authentifizierung des Benutzers, eine Biometrik-basierte Authentifizierung des Benutzers oder eine Zwei-Faktor-Authentifizierung des Benutzers erfordert.

3. Verfahren nach Anspruch 1, wobei der Sicherheitsindikator um eine Differenz zwischen einem maximalen Spoofing-Score (35) und dem gemessenen Spoofing-Score erhöht wird und wobei das Ergebnis durch ein Vergleichen des Sicherheitsindikators mit einer voreingestellten Schwelle (26) erzeugt wird.

4. Verfahren nach Anspruch 1, wobei der Sicherheitsindikator erhöht wird, falls der gemessene Spoofing-Score in einem vordefinierten Wertebereich liegt, und wobei das Ergebnis durch das Vergleichen des Sicherheitsindikators mit einer vordefinierten Schwelle (24) erzeugt wird.

5. Verfahren nach Anspruch 1, wobei die Karte das Ergebnis erzeugt, bevor der Sicherheitsindikator aktualisiert wird.

6. Verfahren nach Anspruch 1, wobei die Karte den Sicherheitsindikator zurücksetzt, wenn der Benutzer ohne Verwendung biometrischer Daten erfolgreich authentifiziert wurde.

7. Karte (10), die einem Benutzer (50) zugeordnet ist und umfassend einen biometrischen Sensor (40) und einen Speicher, wobei die Karte in der Lage ist, biometrische Daten von dem Benutzer zu erfassen und zu prüfen, ob die biometrischen Daten einen Anti-Spoofing-Test bestehen, wobei sich der Anti-Spoofing-Test von einem Matching-Test unterscheidet,
**dadurch gekennzeichnet, dass** die Karte mindestens eine Verarbeitungseinheit und Programmanweisungen umfasst, die, wenn für eine Transaktion eine Authentifizierung des Benutzers erforderlich ist, die Verarbeitungseinheit veranlassen zum:

- Abrufen, aus dem Speicher, eines Sicherheitsindikators (28), der während einer vorherigen Transaktion aktualisiert wurde, unter Verwendung eines vorherigen Spoofing-Scores, der während der vorherigen Transaktion berechnet wurde,
- falls die biometrischen Daten den Anti-Spoofing-Test bestanden haben, Aktualisieren des Sicherheitsindikators durch Verwenden eines gemessenen Spoofing-Scores, der während des Anti-Spoofing-Tests berechnet wurde, wobei der gemessene Spoofing-Score einen Grad des Erfolgs in dem Anti-Spoofing-Test widerspiegelt,
- Erzeugen eines Ergebnisses (12) durch das Prüfen, ob der Sicherheitsindikator einer vorab festgelegten Sicherheitsregel (27) entspricht,
- Auswählen einer Sicherheitsrichtlinie (23) abhängig von dem Ergebnis,
- Beitragen zu der Authentifizierung des Benutzers gemäß der Sicherheitsrichtlinie oder Ablehnen der Authentifizierung.

8. Karte nach Anspruch 7, wobei die Sicherheitsrichtlinie eine Offline-Authentifizierung des Benutzers, eine Online-Authentifizierung des Benutzers, eine PIN-Code-basierte Authentifizierung des Benutzers, eine Biometrik-basierte Authentifizierung des Benutzers oder eine Zwei-Faktor-Authentifizierung des Benutzers erfordert.

9. Karte nach Anspruch 7, wobei die Karte konfiguriert ist, um den Sicherheitsindikator um eine Differenz zwischen einem maximalen Spoofing-Score (35) und dem gemessenen Spoofing-Score zu erhöhen, und wobei die Karte konfiguriert ist, um das Ergebnis durch das Vergleichen des Sicherheitsindikators mit einer voreingestellten Schwelle (26) zu erzeugen.

10. Karte nach Anspruch 7, wobei die Karte konfiguriert ist, um den Sicherheitsindikator zu erhöhen, falls der gemessene Spoofing-Score in einem vordefinierten Wertebereich liegt, und wobei die Karte konfiguriert ist, um das Ergebnis durch das Vergleichen des Sicherheitsindikators mit einer vordefinierten Schwelle (24) zu erzeugen.

11. Karte nach Anspruch 7, wobei die Karte konfiguriert ist, um das Ergebnis vor dem Aktualisieren des Sicherheitsindikators zu erzeugen.

12. Karte nach Anspruch 7, wobei die Karte konfiguriert ist, um den Sicherheitsindikator zurückzusetzen, wenn der Benutzer ohne Verwendung biometrischer Daten erfolgreich authentifiziert wurde.

13. Karte nach Anspruch 7, wobei die Karte eine Zahlungs-Smartcard ist.


**Revendications**

1. Procédé permettant d'exécuter une authentification d'un utilisateur (50) pour une transaction, une carte (10) associée audit utilisateur comprenant un capteur biométrique (40), le procédé comprenant une étape dans laquelle la carte capture (S20) des données biométriques auprès de l'utilisateur et vérifie si lesdites données biométriques réussissent un test anti-usurpation, ledit test anti-usurpation étant différent d'un test de concordance,
**caractérisé en ce que** le procédé comprend les étapes dans lesquelles la carte :

- récupère (S30), auprès d'une mémoire de la carte, un indicateur de sécurité (28) mis à jour pendant une transaction précédente à l'aide d'un score d'usurpation précédent calculé pendant ladite transaction précédente,
- si lesdites données biométriques réussissent le test anti-usurpation, met à jour (S40) l'indicateur de sécurité en utilisant un score d'usurpation mesuré calculé pendant le test anti-usurpation, ledit score d'usurpation mesuré reflétant un degré de succès dans le test anti-usurpation,
- génère un résultat (12) en vérifiant (S50) si l'indicateur de sécurité est conforme à une règle de sécurité préétablie (27),
- sélectionne (S60) une politique de sécurité (23) dépendant du résultat, et
- contribue (S70) à l'authentification de l'utilisateur selon la politique de sécurité ou rejette (S80) l'authentification.

2. Procédé selon la revendication 1, dans lequel la politique de sécurité exige une authentification hors ligne de l'utilisateur, une authentification en ligne de l'utilisateur, une authentification basée sur code PIN de l'utilisateur, une authentification biométrique de l'utilisateur ou une authentification à deux facteurs de l'utilisateur.

3. Procédé selon la revendication 1, dans lequel l'indicateur de sécurité est incrémenté par une différence entre un score d'usurpation maximal (35) et le score d'usurpation mesuré et dans lequel ledit résultat est généré en comparant l'indicateur de sécurité à un seuil prédéfini (26).

4. Procédé selon la revendication 1, dans lequel l'indicateur de sécurité est incrémenté si le score d'usurpation mesuré est dans une plage prédéfinie de valeurs et dans lequel ledit résultat est généré en comparant l'indicateur de sécurité à un seuil prédéfini (24).

5. Procédé selon la revendication 1, dans lequel la carte génère le résultat avant mise à jour de l'indicateur de sécurité.

6. Procédé selon la revendication 1, dans lequel la carte réinitialise l'indicateur de sécurité lorsque l'utilisateur a été authentifié avec succès sans utiliser de données biométriques.

7. Carte (10) associée à un utilisateur (50) et comprenant un capteur biométrique (40) et une mémoire, la carte pouvant capturer des données biométriques auprès de l'utilisateur et vérifier si lesdites données biométriques réussissent un test anti-usurpation, ledit test anti-usurpation étant différent d'un test de concordance,
**caractérisée en ce que** la carte comprend au moins une unité de traitement et des instructions de programme qui, lorsqu'une authentification de l'utilisateur est requise pour une transaction, amènent ladite unité de traitement à :

- récupérer, auprès de ladite mémoire, un indicateur de sécurité (28) mis à jour pendant une transaction précédente à l'aide d'un score d'usurpation précédent calculé pendant ladite transaction précédente,
- si lesdites données biométriques réussissent le test anti-usurpation, mettre à jour l'indicateur de sécurité en utilisant un score d'usurpation mesuré calculé pendant le test anti-usurpation, ledit score d'usurpation mesuré reflétant un degré de succès dans le test anti-usurpation,

- générer un résultat (12) en vérifiant si l'indicateur de sécurité est conforme à une règle de sécurité préétablie (27),
- sélectionner une politique de sécurité (23) dépendant du résultat,
- contribuer à l'authentification de l'utilisateur selon la politique de sécurité ou rejeter l'authentification.

8. Carte selon la revendication 7, dans laquelle la politique de sécurité exige une authentification hors ligne de l'utilisateur, une authentification en ligne de l'utilisateur, une authentification basée sur code PIN de l'utilisateur, une authentification biométrique de l'utilisateur ou une authentification à deux facteurs de l'utilisateur.

9. Carte selon la revendication 7, dans laquelle la carte est configurée pour incrémenter l'indicateur de sécurité incrémenté par une différence entre un score d'usurpation maximal (35) et le score d'usurpation mesuré, et dans laquelle la carte est configurée pour générer ledit résultat en comparant l'indicateur de sécurité à un seuil prédéfini (26).

10. Carte selon la revendication 7, dans laquelle la carte est configurée pour incrémenter l'indicateur de sécurité si le score d'usurpation mesuré est dans une plage prédéfinie de valeurs et dans laquelle la carte est configurée pour générer ledit résultat en comparant l'indicateur de sécurité à un seuil prédéfini (24).

11. Carte selon la revendication 7, dans laquelle la carte est configurée pour générer le résultat avant mise à jour de l'indicateur de sécurité.

12. Carte selon la revendication 7, dans laquelle la carte est configurée pour réinitialiser l'indicateur de sécurité lorsque l'utilisateur a été authentifié avec succès sans utiliser de données biométriques.

13. Carte selon la revendication 7, dans laquelle la carte est une carte à puce de paiement.

Starting a transaction requiring an authentication of a user by a card (10).　S10

Capturing a biometric data from the user and checking, by the card, said biometric data passes an anti-spoofing test.　S20

Retrieving, from a memory of the card, a security indicator (28) updated during a previous transaction.　S30

If said biometric data passed the anti-spoofing test, updating the security indicator by using a spoofing score computed during the anti-spoofing test.　S40

Checking whether the security indicator complies with a pre-established safety rule (27).　S50

Selecting a security policy (23) depending on a result (12) of the checking.　S60

Depending on selected security policy

Continue

Stop

Rejecting the user authentication　S80

Performing the authentication of the user according to the security policy.　S70

# FIG. 1

FIG. 2

**EP 4 505 330 B1**

**Patent documents cited in the description**

- US 2008056544 A1
- US 2021019586 A1
- JP 2007141113 A